# EUROPEAN PATENT SPECIFICATION

(11) **EP 2 524 559 B1**
(45) Date of publication and mention of the grant of the patent: **16.11.2016**
(21) Application number: 10843337.6
(22) Date of filing: 24.06.2010
(51) Int. Cl.: H04B 7/06, H04L 5/06

(54) **A METHOD AND TRANSMITTER NODE FOR TRANSMITTING DM-RS PATTERN**
VERFAHREN UND ÜBERTRAGUNGSKNOTEN ZUR ÜBERTRAGUNG EINES DM-RS-MUSTERS
PROCÉDÉ ET NOEUD ÉMETTEUR POUR TRANSMISSION DE MOTIF DM-RS

(30) Priority: 12.01.2010 WO PCT/CN2010/000043
(43) Date of publication of application: 21.11.2012
(73) Proprietor: Telefonaktiebolaget LM Ericsson (publ), 164 83 Stockholm (SE)
(72) Inventor: HU, Yang, Beijing CN-100102 (CN); ASTELY, David, SE-168 56 Bromma (SE); HAMMARWALL, David, SE-112 61 Stockholm (SE); JÖNGREN, George, SE-174 62 Sundbyberg (SE); SONG, Xinghua, Beijing CN-100102 (CN); WANG, Jianfeng, Beijing CN-100102 (CN)
(74) Representative: Ericsson
(86) International application number: PCT/SE2010/050725
(87) International publication number: WO 2011/087417

(56) References cited:
- WO-A2-2009/055546
- WO-A2-2010/147853
- US-A1- 2009 262 695
- US-A1- 2010 002 800
- US-A1- 2010 080 154
- US-A1- 2010 157 918
- US-A1- 2010 215 109
- PANASONIC: "Joint consideration of DL DM-RS design and codeword-layer mapping for rank over 3", 3GPP DRAFT; R1-093945, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 1 October 2009 (2009-10-01), XP050388445, [retrieved on 2009-10-05]
- PANASONIC: "Joint consideration of DL DM-RS design and codeword-layer mapping for rank over 3", 3GPP DRAFT; R1-094507, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050388927, [retrieved on 2009-11-02]
- ZTE: "Further investigation on higher order DMRS design", 3GPP DRAFT; R1-093808 FURTHER INVESTIGATION ON HIGHER ORDER DMRS DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388322, [retrieved on 2009-10-09]
- NEC GROUP: "Downlink control signalling support for SU/MU-MIMO", 3GPP DRAFT; R1-094730-MU-MIMO_SIGNALING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389127, [retrieved on 2009-11-03]

## Description

### TECHNICAL FIELD

The invention relates to a transmitter node and a method therein in a radio communications network. In particular, the invention relates to transmit a demodulation reference signal pattern in a radio communications network.

### BACKGROUND

The 3rd Generation Partnership Project (3GPP) is responsible for the standardization of Universal Mobile Telecommunication Service (UMTS) system and Long Term Evolution (LTE). LTE is a technology for realizing high-speed packet-based communication that may reach high data rates both in the downlink and in the uplink, which is thought as a next generation mobile communication system of the UMTS system. The access network of the LTE is also referred to as Evolved Universal Terrestrial Access Network (E-UTRAN). The first release of LTE, referred to as release-8 (Rel-8), may provide peak rates of 300 Mbps, a radio-network delay of e.g. 5 ms or less, a significant increase in spectrum efficiency and a network architecture designed to simplify network operation, reduce cost, etc. In order to support high data rates, LTE allows for a system bandwidth of up to 20 MHz. LTE is also able to operate in different frequency bands and may operate in at least Frequency Division Duplex (FDD) mode and Time Division Duplex (TDD) mode. The modulation technique or the transmission scheme used in LTE is known as Orthogonal Frequency Division Multiplexing (OFDM).

For the next generation mobile communications system e.g. International Mobile Telecommunications (IMT) -advanced and/or LTE-advanced, which is an evolution of LTE, support for bandwidths of up to 100 MHz is being discussed. LTE-advanced can be viewed as a future release of the LTE standard and since it is an evolution of LTE, backward compatibility is important so that LTE-advanced can be deployed in spectrum already occupied by LTE. In both LTE and LTE-advanced radio base stations known as evolved NodeBs (eNB), multiple antennas with precoding/beamforming technology can be adopted in order to provide high data rates to user equipments. Thus, LTE and LTE-advanced are examples of radio systems that are able to provide Multiple-Input, Multiple-Output (MIMO) technology. Another example of a MIMO based system is Worldwide Interoperability for Microwave Access (WiMAX) system.

Reference signals (RS), also called predefined training sequences/signals, are extensively applied in wireless communication systems with the aim to improve detection performance. A basic communication system using reference signals may comprise a transmitter node and a receiver node. The transmitter node may be represented by a radio base station or a user equipment and the receiver node may be represented by a user equipment or a radio base station. The transmitter node may comprise a data block generator wherein the RS is inserted into the transmission block. The data block comprising the RS is then transmitted over a wireless channel to the receiver node. Also, RS is predefined between transmitter node and receiver node. Therefore, at the receiver node a channel estimation is applied first by using RS target in a channel estimator. This channel estimator enables the transmitter node to do coherent detection for demodulating the received signal in a channel demodulator for recovering data in a reliable and proper manner. In case of the downlink, the transmitter node may transmit a signal through a number of transmit antennas and the receiver node may receive the signal through a number of receive antennas. A channel matrix representing channel status may be determined by the number of transmit antennas and receiving antennas. The number of rows is equal to the number of receiving antennas and the number of columns is equal to the number of transmitting antennas. A transmission rank of the matrix is the maximum number of different kinds of information that can be transmitted over the wireless channel. Each of the different kind of information transmitted using a number of transmit antennas may be defined as stream or as used below transmission layer.

In LTE Rel-10, in order to fulfil LTE-advanced downlink spectral efficiency, 30bps/Hz, up to 8 transmission layer transmission should be supported using some kind of advanced antenna configuration, e.g. 8x8 high-order MIMO. When data is transmitted and received through a number of transmit and receiving antennas channel status between the antennas should be known to receive a signal properly. Accordingly, channel state information (CSI) measurement and channel demodulation for data recovery for up to 8 transmission layers should be defined in Rel-10. In LTE Rel-8, cell-specific reference signals (CRS) are used for both channel measurement and channel demodulation for downlink transmission modes 1/2/3/4/5/6 while dedicated RS (DRS) or UE-specific RS is used for channel demodulation for downlink transmission mode 7, i.e. single transmission layer beamforming. If CRS is used to take both channel measurement and demodulation in the high order MIMO, system overhead will be inevitably increased and hence throughput performance will be decreased seriously. So, two types of downlink reference signals are considered for LTE Rel-10:
Channel state information reference signals (CSI-RS) targeting CSI estimation for, e.g. Channel quality indicators (CQI)/precoding matrix indicators (PMI)/transmission rank indicators (RI) reporting when needed. This downlink RS is:
   - Cell-specific
   - Sparse in frequency and time
   - Punctured into the data region of a normal/ Multicast/Broadcast Single Frequency Network (MBSFN) subframe.
Demodulation reference signals (DM-RS) targeting Physical Downlink Shared Channel (PDSCH) demodulation. This downlink reference signal is
   - UE-specific, i.e. the PDSCH and the DM-RS intended for a specific UE are subject to the same precoding operation
   - Present only in resource blocks and transmission layers scheduled by the eNodeB for transmission
   - Signals transmitted on different transmission layers are mutually orthogonal at the eNodeB
   - Total 8 DM-RS ports will be introduced
Herein, embodiments focus on the design of DM-RS only.

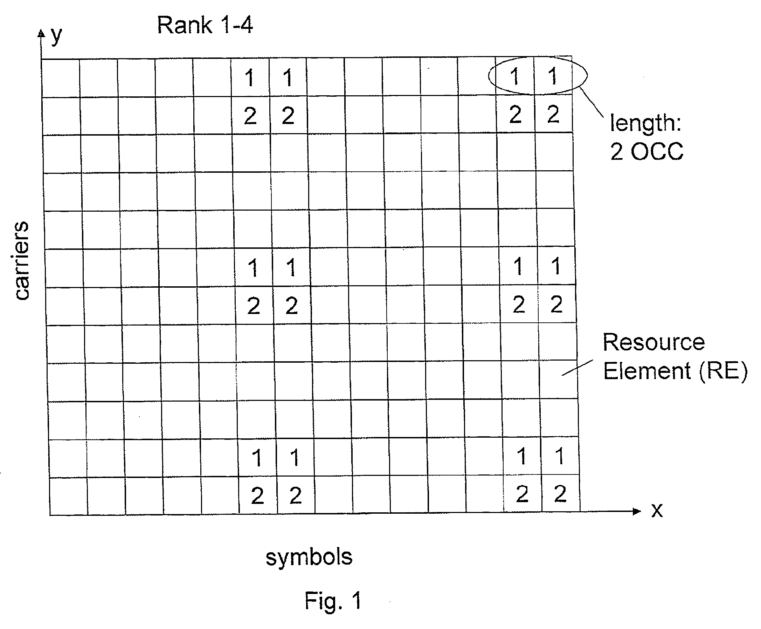

Fig. 1 shows DM-RS pattern design for a normal cyclic prefix (CP). A radio frame structure comprises ten subframes of 1 ms in LTE. A subframe comprises two time slots of 0.5 ms. A time slot comprises a number of Orthogonal Frequency Division Multiplexing (OFDM) symbols in a time domain and a number of resource block RB in a frequency domain. One resource block is shown in Fig. 1 and is defined in symbols along the x-axis and in frequency along the y-axis. The resource block comprises twelve carriers that are sent during one transmission time interval (TTI), which is the time to transmit one subframe. Each slot comprises seven symbols. The resource block comprises a plurality of resource elements. A resource element (RE) is the smallest unit within OFDM and is one OFDM symbol transferred on one carrier. The example illustrates transmission rank 1-4 DM-RS pattern for normal cyclic prefix (CP) and is supporting up to 4 transmission layers, i.e. total 4 DM-RS ports are defined. In summary, total 12 resource elements per transmission layer are provided as DM-RS overhead, denoted as '1' or '2' in Fig. 1. Two code division multiplexing (CDM) groups occupy different subcarriers in frequency domain, i.e. CDM + frequency division multiplexing (FDM) as the basic multiplexing scheme. Each CDM group uses orthogonal code covers (OCC) with each length of 2 in the time domain to multiplex up to two transmission layers. In case of up to 2 transmission layers, only CDM group 1 exists, as marked in '1'.

In LTE Rel-10, in a single user spatial multiplexing, up to two transport blocks can be transmitted to a scheduled UE in a subframe per downlink component carrier. Each transport block is assigned its own modulation and coding scheme. In addition, a transport block is associated with a codeword (CW), and transmission layer mapping is done according to the mapping pattern. The channel encoded bits originating from the same block of information bits is typically referred to as a "codeword". In a multiple transmit antenna device or system, the resulting codewords are then modulated and distributed over the transmit antennas for transmission. Precoding is a popular technique used in conjunction with multi-antenna transmission. The basic principle involved in precoding is to mix and distribute the modulation symbols over the antennas while potentially also taking the current channel conditions into account. Precoding can be implemented by, for example, multiplying the information carrying symbol vector containing modulation symbols by a matrix which is selected to match the channel. Sequences of symbol vectors thus form a set of parallel symbol streams and each such symbol stream is typically referred to as a "transmission layer". Thus, depending on the choice of precoder in a particular implementation, a transmission layer may directly correspond to a certain antenna or a transmission layer may, via the precoder mapping, be distributed onto several antennas, also known as antenna ports. The mechanism by which codewords are assigned to particular transmission layers in such systems is referred to as "mapping" or, more specifically, as "codeword to transmission layer mapping".

However, receiver nodes may not be able to demodulate transmitted data over a plurality of transmission layers.

Document, PANASONIC: "Joint consideration of DL DM-RS design and codeword-layer mapping for rank over 3", 3GPP DRAFT; R1-093945, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 1 October 2009 (2009-10-01), XP050388445, relates to solving the problem of power offset from DM-RS mapping occurring with CDM+FDM hybrid DMRS design using a layer specific power offset notification.

### SUMMARY

An object of embodiments herein is to provide a mechanism that enables a transmission layer-to-demodulation-reference-signal mapping of different transmission ranks in an efficient manner enabling receiver nodes to demodulate transmitted data.

The object may be achieved by embodiments according to the claims 1 and 11.

According to a first aspect of embodiments herein a method in a transmitter node is provided. The method is for transmitting a demodulation reference signal pattern in a resource block to a receiver node using more than two transmission layers over a plurality of transmit antennas. The transmitter node and the receiver node are comprised in a radio communications network.

The transmitter node maps a plurality of codewords to the more than two transmission layers. The transmitter node also maps each of the more than two transmission layers to a respective demodulation reference signal port according to a fixed pattern based on a transmission rank. Each of the demodulation reference signal ports adds a demodulation reference signal pattern to the resource block, which demodulation reference signal ports are associated to two code division multiplexing groups according to an association pattern. The transmission layers of each code division multiplexing group are code division multiplexed and the transmission layers of different code division multiplexing groups are frequency division multiplexed.

The transmitter precodes each codeword and demodulation reference signal pattern, carried over respective transmission layer, and transmits the precoded demodulation reference signal pattern in the resource block to the receiver node.

In order to perform the method a transmitter node is herein provided for transmitting a demodulation reference signal pattern in a resource block to a receiver node using more than two transmission layers over a plurality of transmit antennas in a radio communications network.

The transmitter node comprises a mapping circuit configured to map a plurality of codewords to the more than two transmission layers. In addition, the transmitter node comprises an additional mapping circuit configured to map each of the more than two transmission layers to a respective demodulation reference signal port according to a fixed pattern based on a transmission rank. Each of the demodulation reference signal ports adds a demodulation reference signal pattern to the resource block, which demodulation reference signal ports are associated to two code division multiplexing groups according to an association pattern. The transmission layers of each code division multiplexing group are code division multiplexed and the transmission layers of different code division multiplexing groups are frequency division multiplexed. The transmitter node further comprises a precoding circuit arranged to precode each codeword and demodulation reference signal pattern, carried over respective transmission layer.

The transmitter node also comprises a transmitting circuit comprising the plurality of transmit antennas and configured to transmit the precoded demodulation reference signal pattern in the resource block to the receiver node.

This present solution provides a common or fixed mapping pattern between transmission layers to Demodulation Reference Signal (DM-RS) ports enabling an efficient mapping. Thereby, embodiments enable receiver nodes to demodulate transmitted data.

In some embodiments, a mapping principle is used, called intra-Codeword (CW) mapping here, to make two codewords mapped into different Code Division Multiplexing (CDM) groups for beyond transmission rank 2 transmission. This mapping principle may avoid inter-codeword interference when channel estimation per transmission layer is applied.

In some embodiments, a mapping principle is used called inter-CW mapping, to assign the transmission layers relating to one codeword to both CDM groups as much as possible. These embodiments of mapping have the advantage to simply follow DM-RS port numbering.

Some embodiments herein provide a way to map the transmission layers to demodulation reference signals that is transparent to whether a single user (SU) case or a multi user (MU) case is used.

### BRIEF DESCRIPTION OF THE DRAWINGS

Embodiments will now be described in more detail in relation to the enclosed drawings, in which:
- Fig. 1: is a schematic overview depicting a resource block,
- Fig. 2: is a schematic overview of a transmitter node and a receiver node,
- Fig. 3: is a schematic overview of a mapping pattern of a codeword to transmission layers,
- Fig. 4: is a schematic overview depicting a resource block,
- Fig. 5: is a block diagram depicting embodiments of present solution,
- Fig. 6: is a schematic overview of a mapping pattern according to some embodiments of the present solution,
- Fig. 7: is a schematic overview of a mapping pattern according to some embodiments of the present solution,
- Fig. 8: is a block diagram a mapping of co scheduled user equipment,
- Fig. 9: is a schematic overview of a mapping pattern according to some embodiments of the present solution,
- Fig. 10: is a schematic overview of a mapping pattern according to some embodiments of the present solution,
- Fig. 11: is a block diagram a mapping of co scheduled user equipment,
- Fig. 12: is a schematic flow chart of a method in a transmitter node, and
- Fig. 13: is a block diagram of a transmitter node.

### DETAILED DESCRIPTION

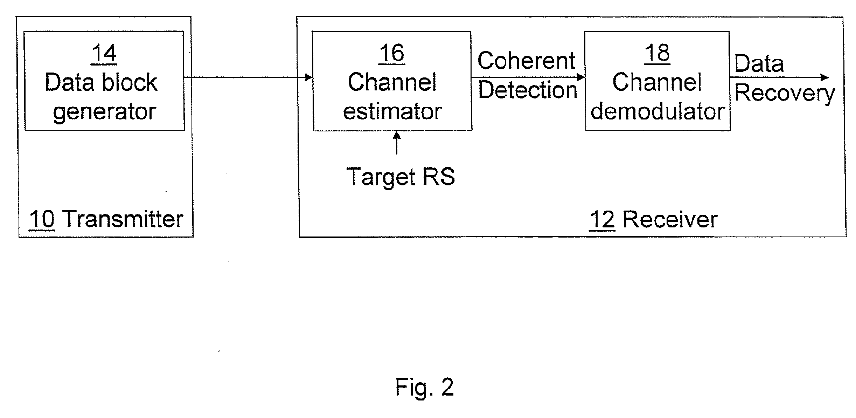

**Fig. 2** shows a basic communication system with reference signals, where a system comprises **a transmitter node 10** and a **receiver node 12.** The transmitter node 10 may be represented by a radio base station or a user equipment and the receiver node 12 may be represented by a user equipment or a radio base station even though the illustrated examples are directed towards a downlink Demodulation Reference Signal (DM-RS). The transmitter node 10 may comprise **a data block generator 14** wherein the DM-RS pattern is inserted into a data block or a resource block. The resource block comprising the DM-RS is then transmitted over a wireless channel to the receiver node 12. Also, the DM-RS pattern is predefined between transmitter node 10 and receiver node 12, that is, the receiver node 12 knows the DM-RS pattern in the signal. Therefore, at the receiver node 12 a channel estimation is applied first by using a DM-RS target, that is, the known DM-RS pattern, in **a channel estimator 16.** This channel estimation is then used to do coherent detection for demodulating the received signal in **a channel demodulator 18** for recovering data in a reliable and proper manner. In case of the downlink, the transmitter node 10 may transmit a signal through a number of transmit antennas and the receiver node 12 may receive the signal through a number of receive antennas. A channel matrix representing channel status may be determined by the number of transmit antennas and receiving antennas. The number of rows is equal to the number of receiving antennas and the number of columns is equal to the number of transmitting antennas. A transmission rank of the matrix is the maximum number of different kinds of information that can be transmitted over the wireless channel. Each of the different kind of information transmitted using a number of transmit antennas may be defined as a transmission layer.

The transmitter node 10 maps a plurality of codewords to more than two transmission layers and maps each of the more than two transmission layers to a respective DM-RS port according to a fixed pattern based on a transmission rank. The transmitter node 10 precodes each codeword and DM-RS pattern, carried over respective transmission layer, and transmits the precoded DM-RS pattern in the resource block to the receiver node. The receiver node 12 may then demodulate the received data based on the DM-RS pattern.

Fig. 2 shows a schematic overview of a radio communications network. The present solution is discussed based on the Evolved Universal Terrestrial Radio Access (E-UTRA) system, which is also commonly referred to as the Long-Term Evolution (LTE) of the widely deployed WCDMA systems but may be implemented in any radio communisations network that uses OFDM and MIMO.

The transmitter node 10 may be represented by a radio base station or a user equipment and the receiver node 12 may be represented by a user equipment or a radio base station even though the illustrated examples are directed towards a downlink RS. Embodiments herein relate generally to DM-RS design for, e.g. LTE Advanced release 10. The present solution is related to the relation between a transmission layer and DM-RS port and to provide a common or fixed mapping pattern between transmission layers to DM-RS ports enabling an efficient mapping and thereby enabling the receiver node to demodulate transmitted data.

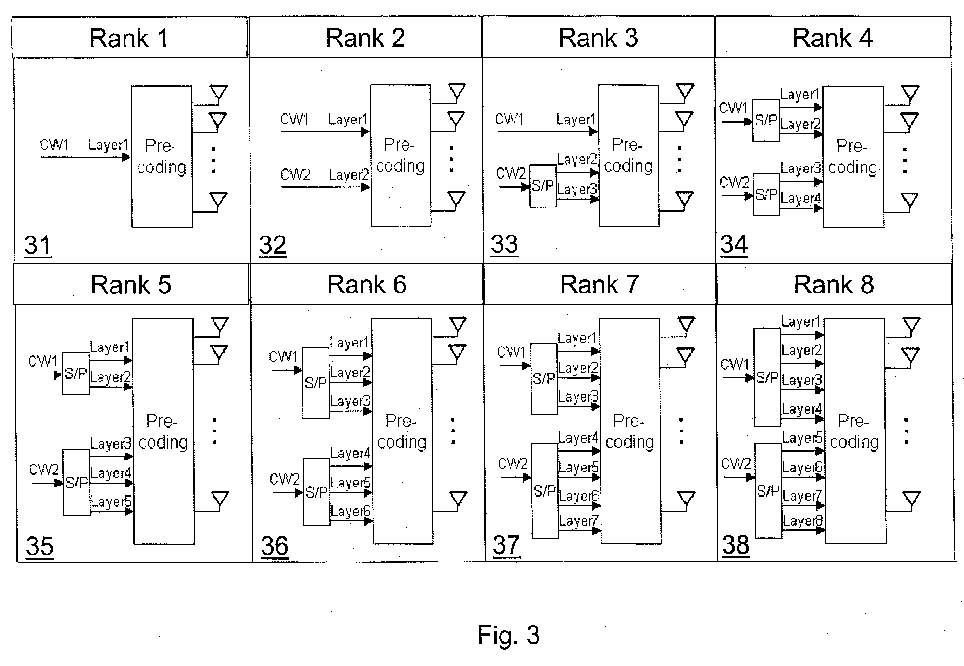

As stated above the transmitter node maps a plurality of codewords to more than two transmission layers. **Fig. 3** is a schematic overview of a codeword to transmission layer mapping. For **case 31** with one transmission layer, a single codeword CW1 is supplied to precoding for transmission via the plural antennas. For **case 32** with two transmission layers, two codewords CW1 and CW2 are supplied to precoding for transmission via the plural antennas. For **case 33** with three transmission layers, one codeword CW1 is supplied to precoding directly. The second codeword CW2 is supplied to precoding via an serial to parallel (S/P) converter which splits it into two signals. In case 43 precoding drives the plural antennas. For **case 34** with four transmission layers, codewords CW1 and CW2 supplies respective S/P converters which split each into two signals and further supplies precoding for transmission via the plural antennas. For **case 35** with five transmission layers, one codeword CW1 supplies a first S/P converter which splits it into two signals and further supplies precoding. A second codeword CW2 supplies a second S/P converter which splits it into three signals and further supplies precoding. Precoding supplies the plural antennas. For **case 36** with six transmission layers, a first codeword CW1 supplies a first S/P converter which splits it into three signals and further supplies precoding. A second codeword CW2 is supplied to a second S/P converter which splits it into three signals and further supplies precoding. Precoding supplies the plural antennas. For **case 37** with seven transmission layers, a first codeword CW1 is supplied to a first S/P converter which splits it into three parts and further supplies precoding. A second codeword CW2 is supplied to a second S/P converter which splits it into four parts and further supplies precoding. Precoding supplies the plural antennas. For **case 38** with eight transmission layers, two codewords CW1 and CW2 is supplied to respective S/P converters, each splitting the signal into four parts and is further supplied for precoding to drive the plural antennas.

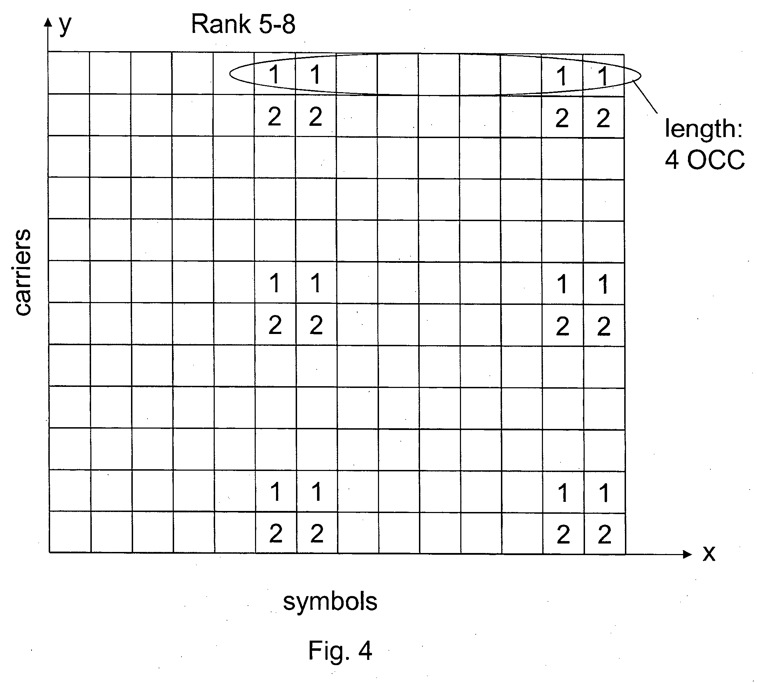

The transmission layers and DM-RS ports are strongly related to data transmission. It is herein disclosed a mapping between them so that the receiver nodes know how to demodulate received data. The DM-RS pattern for transmission rank 1-4, i.e. 1-4 transmission layers, using two CMD groups is disclosed in Fig. 1. However, embodiments herein also disclose the transmission rank 5-8 DM-RS pattern design to further define total 8 DM-RS ports to enable higher MIMO order. In order to keep an efficient extension based on transmission rank 1-4 pattern, the following pattern for transmission rank 5-8 as shown in **Fig. 4** is provided. An OCC length of 4 in the time domain is used for each CDM group to make a soft extension. The carriers of frequencies are defined along a y-axis and symbols are defined along an x-axis. This pattern shares the same RS position of the resource elements allocated to the RS, and keeps the two CDM groups unchanged, which can ease UE implementation to a great extent. DM-RS pattern for the 1 st transmission layer and DM-RS pattern for the 2nd transmission layer are multiplexed by means of CDM by using OCC over four consecutive resource elements (RE) in time domain. DM-RS pattern for the 3rd transmission layer and DM-RS pattern for the 4th transmission layer are multiplexed by means of CDM by using OCC over four consecutive resource elements in time domain. DM-RS patterns for the 1 st transmission layer and the 2nd transmission layer and DM-RS pattern for the 3rd transmission layer and the 4th transmission layer are multiplexed by means of frequency division multiplexing (FDM).

Also, the DM-RS pattern shown in Fig. 4 will be used for transmission rank 5-8 together with transmission rank 1-4. Thus, herein the whole DM-RS pattern from transmission rank 1 to transmission rank 8 is provided. It is herein disclosed how to distribute transmission layers into DM-RS pattern for single-user case and multi-user case and embodiments herein relate to how to distribute transmission layers to a first CDM groups, G1, and a second CDM group, G2.

The present solution uses codewords. It should be noted that each codeword (CW) is associated with up to 4 transmission layers, as shown in Fig. 3 above, and for odd transmission rank mapping, unequal transmission layer allocation will happen between two CWs. Due to the introduction of DM-RS for data demodulation, the same number of DM-RS ports as transmitted transmission layers will be provided. Hence, a new mapping between transmission layer and DM-RS port is in the present solution provided.

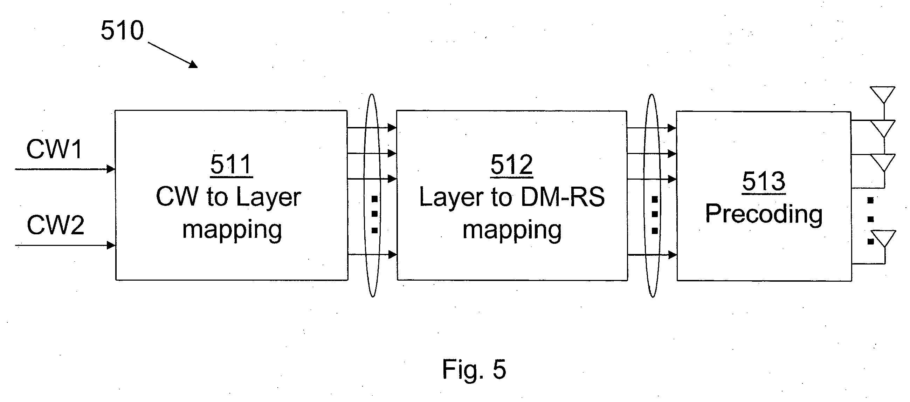

**Fig. 5** is a block diagram depicting **a Rel-10 embodiment 510** illustrating the present solution. The Rel-10 embodiment 510 performs **a transmission layer to DM-RS mapping 512,** in addition to **a codeword to transmission layer mapping 511,** before performing **a precoding process 513.**

As mentioned above, in case of **up** to 2 layers transmission, up to 2 CWs will share one CDM group. Sharing one CDM group results in very simple transmission layer-to-DM-RS mapping by using the mapping defined in case 31 in Fig. 3 for transmission rank-1 and case 32 in Fig. 3 for transmission rank-2. However, in case of beyond 2 layers transmission, i.e. > transmission rank 2, two CDM groups will be applied and FDM multiplexed by each other, which makes the mapping a bit complicated. Herein embodiments provide the relation between two CWs and a DM-RS pattern. Also, embodiments of the present solution are applicable for both single-user (SU) case and multi-user (MU) case, and a transparent mapping for SU and MU is herein provided. Thus, embodiments herein may cover both SU-case and MU-case to save standard effort and also reduce operation complexity.

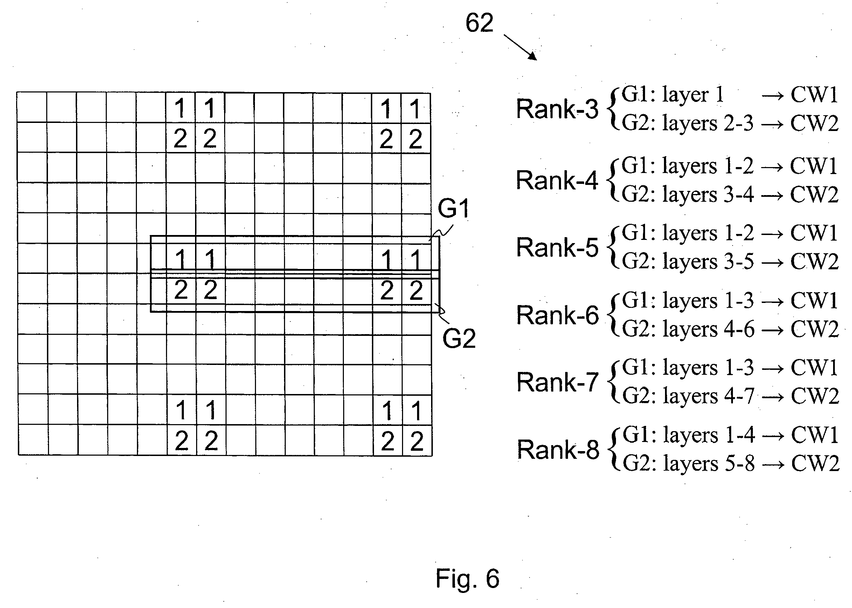

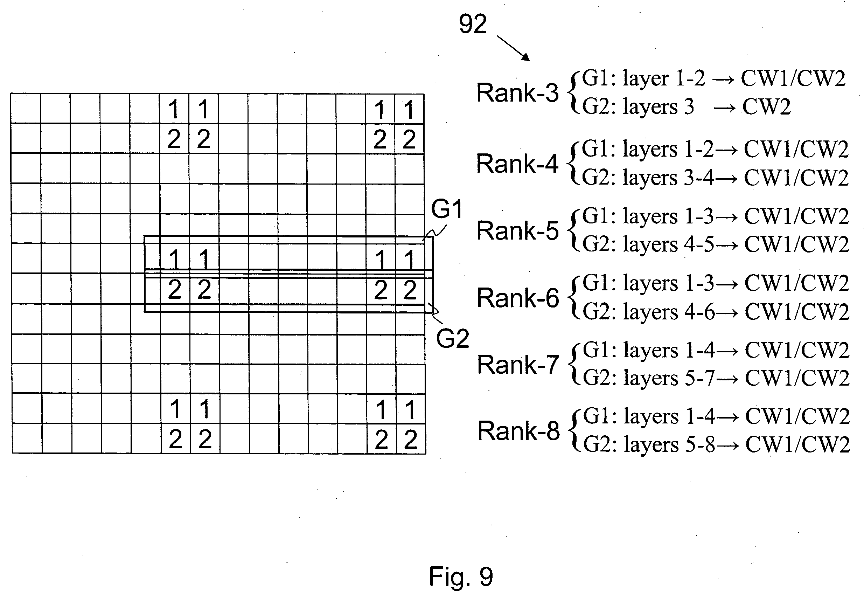

This present solution discloses a common or fixed mapping pattern between transmission layers to DM-RS ports applicable for both SU-MIMO and MU-MIMO in case of downlink multi-transmission layer transmission. More specifically, a mapping principle is used in embodiments herein called intra-CW mapping here, to make two CWs mapped into different CDM groups for beyond transmission rank 2 transmission. Thus, transmission rank 1-2 mapping may be performed reused as in Rel-9. This mapping principle may avoid inter-codeword interference when channel estimation per transmission layer is applied as the codewords are separated into two different CDM groups, which may keep Hybrid automatic repeat request (HARQ) processing independent. The principle of intra-CW mapping is provided in Figs. 6 -8. Also, another fixed mapping, called inter-CW mapping, is disclosed in Figs. 9-11.

**Fig. 6** shows a schematic overview of a mapping pattern for mapping transmission layer to DM-RS ports according to a first embodiment of the present solution. Fig. 6 illustrates an intra codeword mapping pattern. A DM-RS patterns for the different CDM groups are denoted as **62.**

For transmission rank-3: A first CW, CW1, is mapped to transmission layer 1. Transmission layer 1 is mapped to CDM group 1, **G1.** A second codeword, CW2, is mapped to transmission layers 2 and 3. Transmission layers 2 and 3 are mapped to CDM group 2, **G2.**

For transmission rank-4: CW 1 is mapped to transmission layers 1-2. Transmission layers 1-2 are mapped to the G1. CW2 is mapped to transmission layers 3 and 4. Transmission layers 3 and 4 are mapped to G2.

For transmission rank-5: CW 1 is mapped to transmission layers 1-2. Transmission layers 1-2 are mapped to the G1. CW2 is mapped to transmission layers 3 -5. Transmission layers 3-5 are mapped to G2.

For transmission rank-6: CW 1 is mapped to transmission layers 1-3. Transmission layers 1-3 are mapped to the G1. CW2 is mapped to transmission layers 4-6. Transmission layers 3-6 are mapped to G2.

For transmission rank-7: CW 1 is mapped to transmission layers 1-3. Transmission layers 1-3 are mapped to the G1. CW2 is mapped to transmission layers 4-7. Transmission layers 3-7 are mapped to G2.

For transmission rank-8: CW 1 is mapped to transmission layers 1-4. Transmission layers 1-4 are mapped to the G1. CW2 is mapped to transmission layers 5-8. Transmission layers 5-8 are mapped to G2.

The fixed pattern of mapping according to some embodiments of the present solution may have the following advantages:
- Fixed mapping principle for transmission rank 3-8 cases,
- Fixed mapping pattern to cover both SU-MIMO and MU-MIMO,
- Keep independent HARQ as much as possible for each UE, and/or
- Applicable to both normal CP and extended CP with a different pattern of resource elements

Herein a description of a SU-MIMO case and then a MU-MIMO case will follow. As discussed above, one CDM group is associated with up to 4 DM-RS ports in a so called association pattern. For illustration purpose, we define the DM-RS ports as follows
- CDM group 1: DM-RS ports 1/2/5/6
- CDM group 2: DM-RS ports 3/4/7/8,
   alternatively
- CDM group 1: DM-RS ports 1/2/5/7
- CDM group 2: DM-RS ports 3/4/6/8

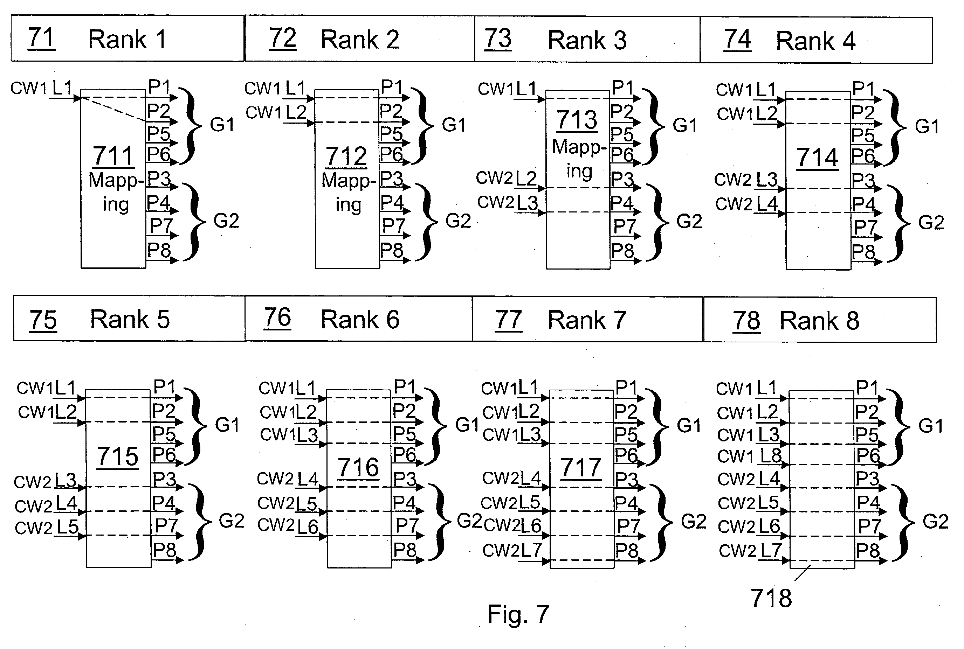

For SU-MIMO case, one UE will occupy the allocated resource blocks (RB) alone. So, this UE may use all supported transmission layers for data transmission given a transmission rank. Based on codeword-to-transmission layer mapping specified in Fig. 3 and the intra-CW mapping principle in Fig. 6, the detailed transmission layer-to-DM-RS port mapping is shown in **Fig. 7.** Fig. 7 shows that the mapping pattern of transmission rank 1-2 may be re-used in accordance with what has been specified in Rel-9 and when only one CDM group is used. The basic principle according to embodiments of the present solution is that the transmission layers relating to one codeword are assigned to the DM-RS ports within one CDM group. Note that each CDM group comprises of up to 4 DM-RS ports, which occupy the same 12 OFDM resource elements and are multiplexed through orthogonal code covers.

FIG. 7 illustrates two input codewords, CW1 and CW2. A baseband signal representing a downlink physical channel is produced by the following steps. Each input codeword to be transmitted on a physical channel has its bits scrambled by respective scrambling circuits. Corresponding modulators modulate the scrambled bits generating complex-valued modulation symbols. The channel encoded bits originating from the same block of information bits is typically referred to as a "codeword". The codeword is the result of processing the information bits by performing, for example, turbo encoding, rate matching, interleaving, etc. In a multiple transmit antenna system, the resulting codewords are then modulated and distributed over the transmit antennas for transmission.

One codeword CW1 or CW2 respectively may be supplied to a serial to parallel (S/P) converter which splits the CW1 and CW2 into two signals respectively and further are precoded for transmission via a plurality of antennas. Complex-valued modulation symbols for respective CW are mapped onto the transmission layers. A single precoding circuit precodes the complex-valued modulation symbols on each transmission layer for transmission on the antenna ports. The precoding circuit input a block of vectors from transmission layer mapper and generates a block of vectors to be mapped onto resources on each of the antenna ports. Corresponding resource channel mappers map the complex-valued modulation symbols for each antenna port to resource elements. Corresponding OFDM signal generation circuits generate complex-valued time-domain the Orthogonal Frequency Division Multiplexing (OFDM) signal for each antenna port.

An extension of the codeword-to-transmission layer mapping or simply termed transmission layer mapping for transmission layers 4-8 is provided. The extension needs to be backward compatible with LTE Rel. 8 and introduce minimum impact on the current LTE specification especially in terms of control signalling.

Fig. 7 shows the fixed mapping of transmission ranks up to Transmission rank 8 according to embodiments of the present solution. Each transmission rank has a fixed mapping scheme **711-718:**
For case **71** with one transmission layer, a single codeword CW1 is mapped to a **first transmission layer** L1. The first transmission layer is then mapped to **a first DM-RS port P1 of a first CDM group G1.** The first transmission layer may also be mapped to a **second DM-RS port P2** of the first CDM group G1. The modulation symbol and DM-RS are supplied to precoding for transmission via one or more transmit antennas. Modulation symbol here may also be referred to as Physical Downlink Shared Channel (PDSCH) symbol.

For case **72** with two transmission layers, one codeword CW1 is mapped to the first transmission layer L1 and **a second transmission layer L2.** The first transmission layer L1 is then mapped to the first DM-RS port P1 and the second transmission layer L2 is mapped to the second DM-RS port P2 of the first CDM group G1. The modulation symbols and DM-RS are supplied to precoding for transmission via plural antennas.

For case **73** with three transmission layers, one codeword CW1 is mapped to the first transmission layer L1. The first transmission layer L1 is then mapped to the first DM-RS port P1 of the first CDM group G1. The second codeword CW2 is mapped to the second transmission layer L2 and **a third transmission layer L3.** The second transmission layer L2 is then mapped to **a third DM-RS port P3** and the third transmission layer L3 is mapped to **a fourth DM-RS port P4 of a second CDM group G2.** The modulation symbols and DM-RS are supplied to precoding for transmission via plural antennas.

For case **74** with four transmission layers, one codeword CW1 is mapped to the first transmission layer L1 and second transmission layer L2. The first transmission layer L1 is then mapped to the first DM-RS port P1 of the first CDM group G1 and the second transmission layer is mapped to the second DM-RS port P2 of the first CDM group G1. The second codeword CW2 is mapped to the third transmission layer L3 and **a fourth transmission layer L4.** The third transmission layer L3 is then mapped to the third DM-RS port P3 and the fourth transmission layer L4 is mapped to the fourth DM-RS port P4 of the second CDM group G2. The modulation symbols and DM-RS are supplied to precoding for transmission via plural antennas.

For case 75 with five transmission layers, one codeword CW1 is mapped to the first transmission layer L1 and second transmission layer L2. The first transmission layer L1 is then mapped to the first DM-RS port P1 of the first CDM group G1 and the second transmission layer is mapped to the second DM-RS port P2 of the first CDM group G1. The second codeword CW2 is mapped to the third transmission layer L3, the fourth transmission layer L4 and **a fifth transmission layer L5.** The third transmission layer L3 is then mapped to the third DM-RS port P3, the fourth transmission layer L4 is mapped to the fourth DM-RS port P4, and the fifth transmission layer L5 is mapped to **a seventh DM-RS port P7** of the second CDM group G2. The modulation symbols and DM-RS are supplied to precoding for transmission via plural antennas.

For case **76** with six transmission layers, one codeword CW1 is mapped to the first transmission layer L1, second transmission layer L2 and a third transmission layer L3. The first transmission layer L1 is then mapped to the first DM-RS port P1 of the first CDM group G1, the second transmission layer L2 is mapped to the second DM-RS port P2 of the first CDM group G1, and the third transmission layer L3 is mapped to **a fifth DM-RS port P5** of the first CDM group G1. The second codeword CW2 is mapped to the fourth transmission layer L4, the fifth transmission layer L5 and **a sixth transmission layer L6.** The fourth transmission layer L4 is then mapped to the third DM-RS port P3, the fifth transmission layer L5 is mapped to the fourth DM-RS port P4, and the sixth transmission layer L6 is mapped to the seventh port P7 of the second CDM group G2. The modulation symbols and DM-RS are supplied to precoding for transmission via plural antennas.

For case **77** with seven transmission layers, one codeword CW1 is mapped to the first transmission layer L1, second transmission layer L2 and a third transmission layer L3. The first transmission layer L1 is then mapped to the first DM-RS port P1 of the first CDM group G1, the second transmission layer L2 is mapped to the second DM-RS port P2 of the first CDM group G1, and the third transmission layer L3 is mapped to the fifth port P5 of the first CDM group G1. The second codeword CW2 is mapped to the fourth transmission layer L4, the fifth transmission layer L5, a sixth transmission layer L6 and **a seventh transmission layer L7.** The fourth transmission layer L4 is then mapped to the third DM-RS port P3, the fifth transmission layer L5 is mapped to the fourth DM-RS port P4, the sixth transmission layer L6 is mapped to the seventh port P7, and the seventh transmission layer is mapped to **a eighth DM-RS port P8 of** the second CDM group G2. The modulation symbols and DM-RS are supplied to precoding for transmission via plural antennas.

For **case 78** with eight transmission layers, one codeword CW1 is mapped to the first transmission layer L1, the second transmission layer L2, the third transmission layer L3, and **an eighth transmission layer L8.** The first transmission layer L1 is then mapped to the first DM-RS port P1 of the first CDM group G1, the second transmission layer L2 is mapped to the second DM-RS port P2 of the first CDM group G1, the third transmission layer L3 is mapped to the fifth port P5 of the first CDM group G1, and the eighth transmission layer L8 is mapped to **a sixth DM-RS port P6** of the first CDM group G1. The second codeword CW2 is mapped to the fourth transmission layer L4, the fifth transmission layer L5, a sixth transmission layer L6 and the seventh transmission layer L7. The fourth transmission layer L4 is then mapped to the third DM-RS port P3, the fifth transmission layer L5 is mapped to the fourth DM-RS port P4, the sixth transmission layer L6 is mapped to the seventh port P7, and the seventh transmission layer is mapped to the eighth port P8 of the second CDM group G2. The modulation symbols and DM-RS are supplied to precoding for transmission via plural antennas.

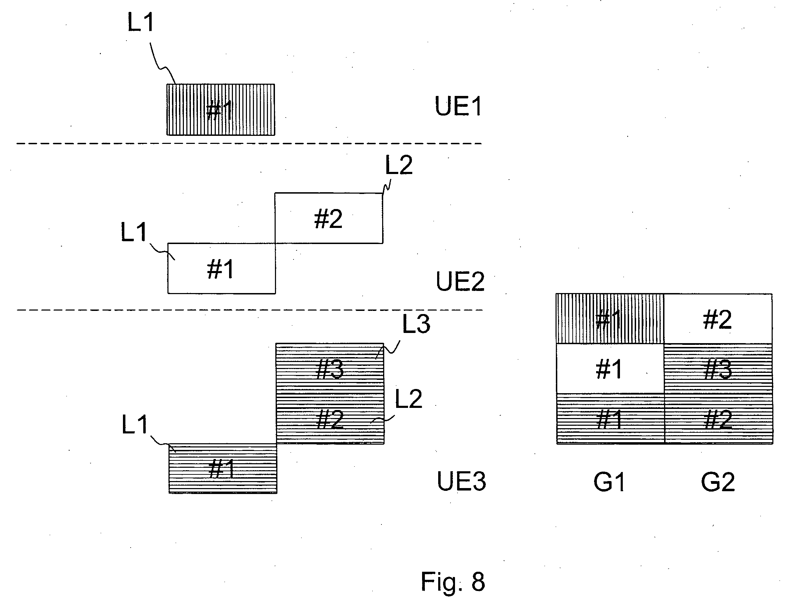

**Fig. 8** shows embodiments of the present solution using an intra codeword mapping scheme for MU-MIMO case, where the transmission rank 6 mapping pattern is used with 3 co-scheduled UEs, **UE1-UE3.** UE1 transmits data, #1, over one transmission layer, L1, mapped to a DM-RS port of CDM group 1, G1. UE2 transmits data, #1, #2 over 2 transmission layers, L1,L2, mapped to a DM-RS port of CDM group 1, G1, and a DM-RS port of CDM group 2, G2. UE3 transmits data, #1,#2,#3, over 3 transmission layers, L1,L2,L3, mapped to a DM-RS port of CDM group 1, G1, and to two DM-RS ports of CDM group 2, G2. Resulting in that the codeword interference is reduced by keeping the codewords separated in different CDM groups.

**Fig. 9** shows a schematic overview of a mapping pattern for mapping transmission layer to DM-RS ports according to some embodiments of the present solution. Fig. 9 illustrates an inter codeword mapping pattern as opposed to the embodiments in Figs 6-8 illustrating the intra codeword mapping. A DM-RS pattern for the different CDM groups is denoted as **92.** The inter codeword mapping aims to make each CW mapped into both CDM groups as much as possible. Following DM-RS port numbering is to make intertransmission layer mapping. This method has very clear mapping between transmission layer and DM-RS ports.

For transmission rank-3: transmission layers 1 and 2 are mapped to CW 1 and CW2 and DM-RS ports of CDM group 1, G1. Transmission layer 3 is mapped to the second codeword CW2 and to a DM-RS port of CDM group 2, G2.

For transmission rank-4: transmission layers 1-2 are mapped to CW 1 and CW2 and DM-RS ports of CDM group 1, G1. Transmission layers 3 and 4 are mapped to the CW1 and CW2 and to DM-RS ports of CDM group 2, G2.

For transmission rank-5: transmission layers 1-3 are mapped to CW 1 and CW2 and DM-RS ports of CDM group 1, G1. Transmission layers 4-5 are mapped to the codewords CW1 and CW2 and to DM-RS ports of CDM group 2, G2.

For transmission rank-6: transmission layers 1-3 are mapped to CW 1 and CW2 and DM-RS ports of CDM group 1, G1. Transmission layers 4-6 are mapped to CW1 and CW2 and to DM-RS ports of CDM group 2, G2.

For transmission rank-7: transmission layers 1-4 are mapped to CW 1 and CW2 and DM-RS ports of CDM group 1, G1. Transmission layers 5-7 are mapped to the CW1 and CW2 and to DM-RS ports of CDM group 2, G2.

For transmission rank-8: transmission layers 1-4 are mapped to CW 1 and CW2 and DM-RS ports of CDM group 1, G1. Transmission layers 5-8 are mapped to CW1 and CW2 and to DM-RS ports of CDM group 2, G2.

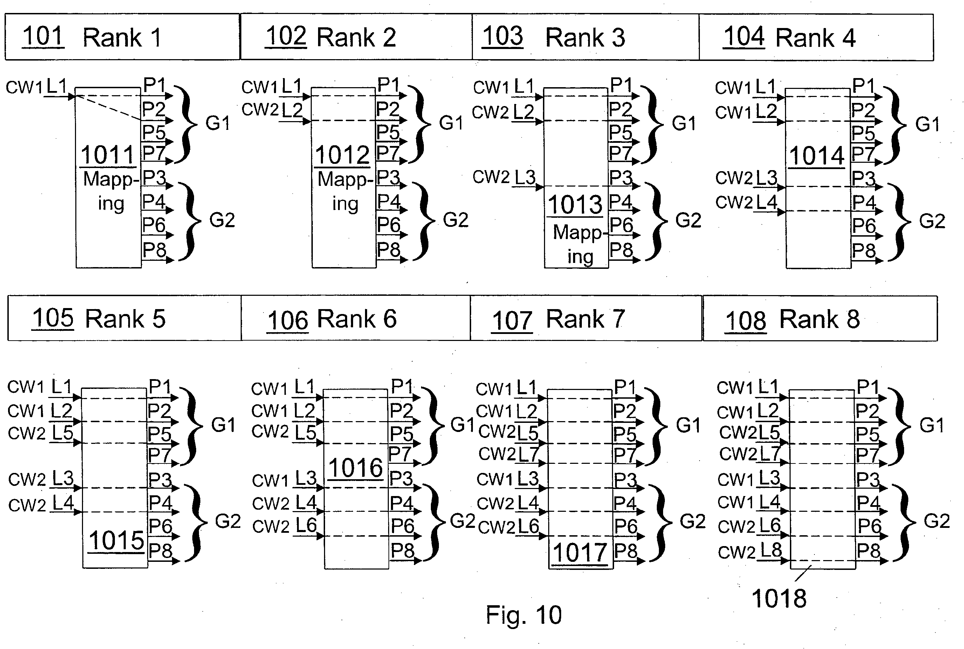

**Fig. 10** shows a fixed mapping based on the principle of inter-CW mapping and codeword-to-transmission layer mapping specified in Fig. 3. The detailed transmission layer-to-DM-RS port mapping is shown in Fig. 10, where, as also stated in the intra-CW mapping above, transmission layer mapping for transmission rank 1-2 SU/MU-MIMO may re-use what has been specified in Rel-9 and only one CDM group is used while transmission layer mapping for transmission rank 3-8 SU-MIMO is to assign the transmission layers relating to one codeword to both CDM groups as much as possible. The advantage is to simply follow DM-RS port numbering. Herein also the DM-RS ports of the CDM groups are, as stated above, the alternatively allocated DM-RS ports, i.e. CDM group 1 - DM-RS ports 1/2/5/7 and CDM group 2 - DM-RS ports 3/4/6/8.

Fig. 10 shows the fixed mapping of transmission ranks up to Transmission rank 8. Each transmission rank has a fixed mapping scheme **1011-1018:**

For case **101** with one transmission layer, a single codeword CW1 is mapped to **a first transmission layer L1.** The first transmission layer is then mapped to **a first DM-RS port P1 of a first CDM group G1.** The first transmission layer may also be mapped to **a second DM-RS port P2** of the first CDM group G1. The modulation symbol and DM-RS are supplied to precoding for transmission via one or more transmit antennas.

For case **102** with two transmission layers, one codeword CW1 is mapped to the first transmission layer L1 and one CW2 is mapped to **a second transmission layer L2.** The first transmission layer L1 is then mapped to the first DM-RS port P1 and the second transmission layer L2 is mapped to the second DM-RS port P2 of the first CDM group G1. The modulation symbol and DM-RS are supplied to precoding for transmission via plural antennas.

For case **103** with three transmission layers, one codeword CW1 is mapped to the first transmission layer L1. The first transmission layer L1 is then mapped to the first DM-RS port P1 of the first CDM group G1. The modulation symbol and DM-RS are supplied to precoding for transmission via plural antenna. The second codeword CW2 is mapped to the second transmission layer L2 and a **third transmission layer L3.** The second transmission layer L2 is then mapped to the second DM-RS port P2 and the third transmission layer L3 is mapped to **a third DM-RS port P3 of a second CDM group G2.** The modulation symbols and DM-RS pattern are supplied to precoding for transmission via plural antennas.

For case **104** with four transmission layers, one codeword CW1 is mapped to the first transmission layer L1 and second transmission layer L2. The first transmission layer L1 is then mapped to the first DM-RS port P1 of the first CDM group G1 and the second transmission layer is mapped to the second DM-RS port P2 of the first CDM group G1. The second codeword CW2 is mapped to the third transmission layer L3 and **a fourth transmission layer L4.** The third transmission layer L3 is then mapped to the third DM-RS port P3 and the fourth transmission layer L4 is mapped to **a fourth DM-RS port P4** of the second CDM group G2. The modulation symbols and DM-RS pattern are supplied to precoding for transmission via plural antennas.

For case **105** with five transmission layers, one codeword CW1 is mapped to the first transmission layer L1 and second transmission layer L2. The first transmission layer L1 is then mapped to the first DM-RS port P1 of the first CDM group G1 and the second transmission layer is mapped to the second DM-RS port P2 of the first CDM group G1. The second codeword CW2 is mapped to the third transmission layer L3, the fourth transmission layer L4 and **a fifth transmission layer L5.** The third transmission layer L3 is then mapped to the third DM-RS port P3 and the fourth transmission layer L4 is mapped to the fourth DM-RS port P4 of the second CDM group G2. The fifth transmission layer L5 is mapped to **a fifth DM-RS port P7** of the first CDM group G1. The modulation symbols and DM-RS pattern are supplied to precoding for transmission via plural antennas.

For case **106** with six transmission layers, one codeword CW1 is mapped to the first transmission layer L1, second transmission layer L2 and a third transmission layer L3. The first transmission layer L1 is then mapped to the first DM-RS port P1 of the first CDM group G1, the second transmission layer L2 is mapped to the second DM-RS port P2 of the first CDM group G1, and the third transmission layer L3 is mapped to the third DM-RS port of the second CDM group G2. The second codeword CW2 is mapped to the fourth transmission layer L4, the fifth transmission layer L5 and **a sixth transmission layer L6.** The fourth transmission layer L4 is then mapped to the fourth DM-RS port P4 of the second CDM group G2 and the fifth transmission layer L5 is mapped to the fifth DM-RS port P5 of the first DM-RS group G1. The sixth transmission layer L6 is mapped to **a sixth port P6** of the second CDM group G2. The modulation symbols and DM-RS pattern is supplied to precoding for transmission via plural antennas.

For case **107** with seven transmission layers, one codeword CW1 is mapped to the first transmission layer L1, second transmission layer L2 and a third transmission layer L3. The first transmission layer L1 is then mapped to the first DM-RS port P1 of the first CDM group G1, the second transmission layer L2 is mapped to the second DM-RS port P2 of the first CDM group G1, and the third transmission layer L3 is mapped to the third port P3 of the second CDM group G2. The second codeword CW2 is mapped to the fourth transmission layer L4, the fifth transmission layer L5, a sixth transmission layer L6 and **a seventh transmission layer L7.** The fourth transmission layer L4 is then mapped to the fourth DM-RS port P4 of the second CDM group G2, the fifth transmission layer L5 is mapped to the fifth DM-RS port P5 of the first CDM group G1, and the sixth transmission layer L6 is mapped to the sixth port P6 of the second CDM group G2. The seventh transmission layer L7 is mapped to **a seventh port P7** of the first CDM group G1. The modulation symbols and DM-RS pattern is supplied to precoding for transmission via plural antennas.

For case **108** with eight transmission layers, one codeword CW1 is mapped to the first transmission layer L1, the second transmission layer L2, the third transmission layer L3, and the fourth transmission layer. The first transmission layer L1 is then mapped to the first DM-RS port P1 of the first CDM group G1, and the second transmission layer L2 is mapped to the second DM-RS port P2 of the first CDM group G1. The third transmission layer L3 is mapped to the third port P3 of the second CDM group G2, and the fourth transmission layer L4 is mapped to the fourth port P4 of the second CDM group G2. The second codeword CW2 is mapped to the fifth transmission layer L5, the sixth transmission layer L6, the seventh transmission layer L7 and **an eighth transmission layer L8.** The fifth transmission layer L5 is then mapped to the fifth DM-RS port P5 of the first CDM group G1, the sixth transmission layer L6 is mapped to the sixth DM-RS port P6 of the second CDM group G2, and the seventh transmission layer L7 is mapped to the seventh port P7 of the first CDM group G1. The seventh transmission layer is mapped to **an eighth port P8** of the second CDM group G2. The modulation symbols and DM-RS pattern are supplied to precoding for transmission via plural antennas.

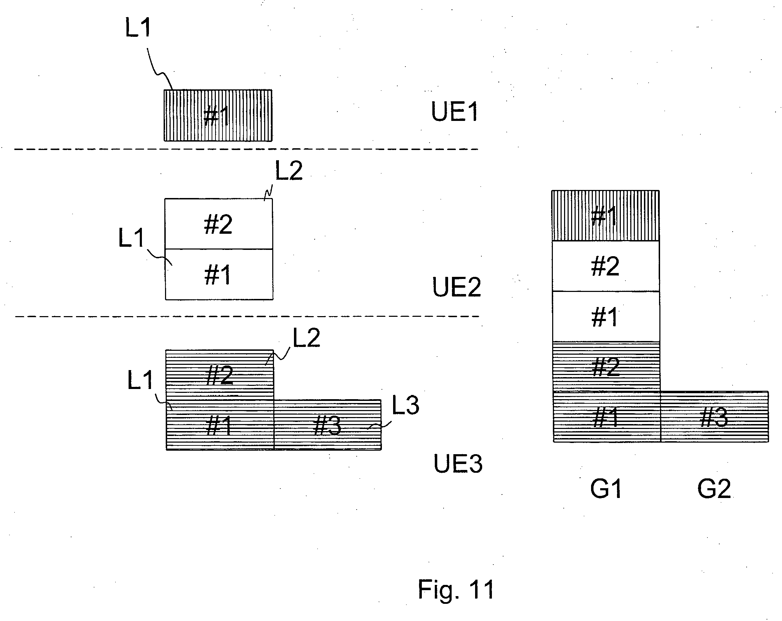

**Figure 11** shows an example to describe how mapping scheme works for MU-MIMO case, where the transmission rank 6 mapping pattern is used with 3 co-scheduled UEs, each of 1 transmission layer, 2 transmission layers and 3 transmission layers respectively. Thus, a first user equipment UE1 is scheduled transmitting data #1 for transmission layer 1, L1, mapped to a DM-RS port of a first CDM group G1. A second user equipment UE2 is scheduled transmitting data #1, #2, for 2 transmission layers, L1,L2, mapped to DM-RS ports of the first CDM group, G1. A third user equipment UE3 is scheduled transmitting data, #1,#2,#3, for three transmission layers, L1,L2,L3, mapped to DM-RS ports of the first CDM group, G1, and a DM-RS port of a second CDM group, G2. The DM-RS pattern follow the transmission rank 3 for inter codeword mapping.

It should be understood, in addition, for MU-MIMO case, control signalling may be performed to indicate to each UE which DM-RS ports are allocated to which transmission layer. This can guarantee UEs to perform channel estimation using proper DM-RS.

For MU-MIMO cases, several UEs will share the same resource blocks at the same time. So, each UE will only use part of transmitted transmission layers given a transmission rank pattern. It's strongly desired to make a simple and natural extension to SU-MIMO case. Embodiments propose the following two steps processing for MU-MIMO case
- Step-1: allocate each UE according to intra-CW mapping principle or inter-CW mapping
- Step-2: repeat step-1 for other co-scheduled UEs.

Embodiments herein may re-use SU-MIMO mapping scheme on top of multi-user scheduling, which can make the transmission layer-to-DM-RS port mapping scheme proposed in Figs. 7 or 10 transparent to SU-MIMO and MU-MIMO. This further meets the principle of dynamic switching between SU-MIMO and MU-MIMO. The present solution discloses a fixed transmission layer mapping for both transmission rank 1-2 SU/MU-MIMO and transmission rank 3-8 SU-MIMO, where there is no any additional control signalling needed.

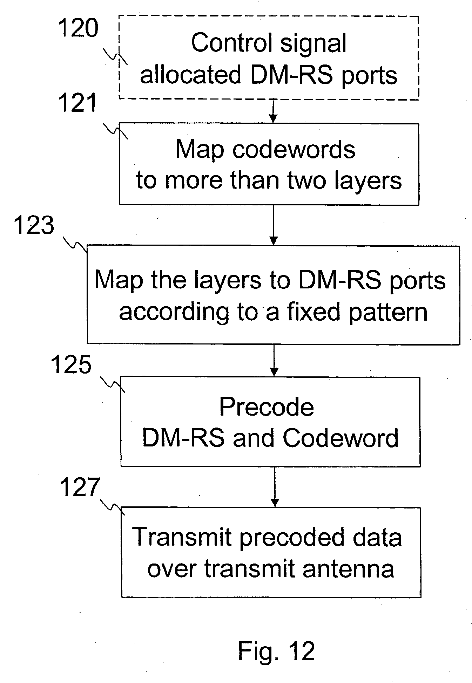

The method steps in the transmitter node, referred to as transmitter 10 in the figures, for transmitting a demodulation reference signal in a resource block to a receiver node 12 according to some general embodiments will now be described with reference to a flowchart depicted in **Fig. 12****.** The steps do not have to be taken in the order stated below, but may be taken in any suitable order. The transmitter node 10 uses more than two transmission layers over a plurality of transmit antennas. The transmitter node 10 and receiver node 12 are comprised in a radio communications network. Thus, Fig. 12 shows the transmitter node 10 that maps according to the present solution and signals the mapping to the receiver node 12.

**Step 120.** This is an optional step as indicated by the dashed line. In some embodiments the transmitter node 10 may control signal to the receiver node 12 indicating which demodulation reference signal port or ports are allocated to the receiver node 12.

**Step 121.** The transmitter node 10 maps a plurality of codewords to the more than two transmission layers. For example, a first codeword and a second codeword are mapped to different transmission layers according to an algorithm that may be fixed based on transmission rank.

**Step 123.** The transmitter node 10 maps each of the more than two transmission layers to a respective demodulation reference signal port according to a fixed pattern based on a transmission rank.

Each of the demodulation reference signal ports adds a demodulation reference signal pattern to the resource block. The demodulation reference signal ports are associated to two code division multiplexing groups according to an association pattern. The transmission layers of each code division multiplexing group are code division multiplexed and the transmission layers of different code division multiplexing groups are frequency division multiplexed. Thus, the transmission layers are CDM and FDM multiplexed in the resource block.

The association pattern may define that each of the two code division multiplexing groups comprises up to four demodulation reference signal ports, each of which adds a demodulation reference signal to the resource block according to the demodulation reference signal pattern. The demodulation reference signal patterns of each of the two code division multiplexing groups occupy same orthogonal frequency division multiplexing resource elements and of which the transmissions transmission layers are multiplexed through orthogonal code covers (OCC). Thus, the OCC separates the information being transmitted over the different transmission layers.

In some embodiments, the fixed pattern may define that transmission layers mapped to a certain codeword is mapped to demodulation reference signal ports within one and the same code division multiplexing group, a so called intra codeword mapping. Alternatively, the fixed pattern may define that transmission layers mapped to a certain codeword is mapped to demodulation reference signal ports within different code division multiplexing groups, a so called inter codeword mapping.

The fixed pattern may applicable for transmission rank 2-8.

**Step 125.** The transmitter node 10 precodes each codeword and demodulation reference signal pattern ,carried over respective transmission layer. For example, the transmitter node precodes the resource block carrying the codeword and the DM-RS pattern in such a way that the different DM-RS pattern and codewords for different transmission layers may be transmitted over one or more transmission antennas.

The precoder is a weighting matrix. Data symbols and DM-RS will share the precoder, thus, the equivalent channel information may be estimated by identifying the transmission layers based on DM-RS pattern.

A basic principle involved in precoding is to mix and distribute the modulation symbols over the antennas while potentially also taking the current channel conditions into account. Precoding may be implemented by, for example, multiplying an information carrying symbol vector containing modulation symbols by a matrix which is selected to match the channel. Sequences of symbol vectors thus form a set of parallel symbol streams and each such symbol stream is typically referred to as a "transmission layer". Thus, depending on the choice of precoder in a particular implementation, a transmission layer may directly correspond to a certain antenna or a transmission layer may, via the precoder mapping, be distributed onto several antennas, also known as antenna ports.

**Step 127.** The transmitter node 10 transmits the precoded demodulation reference signal pattern in the resource block to the receiver node 12. After precoding, precoded data and DM-RS pattern are the output. DM-RS pattern is relatively independent of the precoding.

It should be noted that the resource block may be allocated to a number of receiver nodes in a Multi User Multi Input Multi Output manner and/or to a receiver node in a Single User Multi Input Multi Output manner.

The Demodulation reference signal pattern may be used for Physical Downlink Shared Channel demodulation.

In some embodiments, a first code division multiplexed group of the two code division multiplexing groups is associated to demodulation reference signal ports numbers 1,2,5 and 6, or 1,2,5, and 7. A second code division multiplexed group of the two code division multiplexing groups is associated with demodulation reference signal ports 3,4,7 and 8, or 3,4,6 and 8. This may be defined in the association pattern that may be fixed.

In order to perform the method described above a transmitter node 10 is provided. The transmitter node 10 may be represented by a radio base station or a user equipment. A radio base station may be referred to as e.g. a NodeB, an evolved Node B (eNB, or eNode B), a base transceiver station, Access Point Base Station, base station router, or any other network unit capable to communicate with a user equipment within respective cell depending e.g. of the radio access technology and terminology used.

The user equipment may be represented by e.g. a wireless communication terminal, a mobile cellular phone, a Personal Digital Assistant (PDA), a wireless platform, a laptop, a computer or any other kind of device capable to communicate wirelessly with a radio base station.

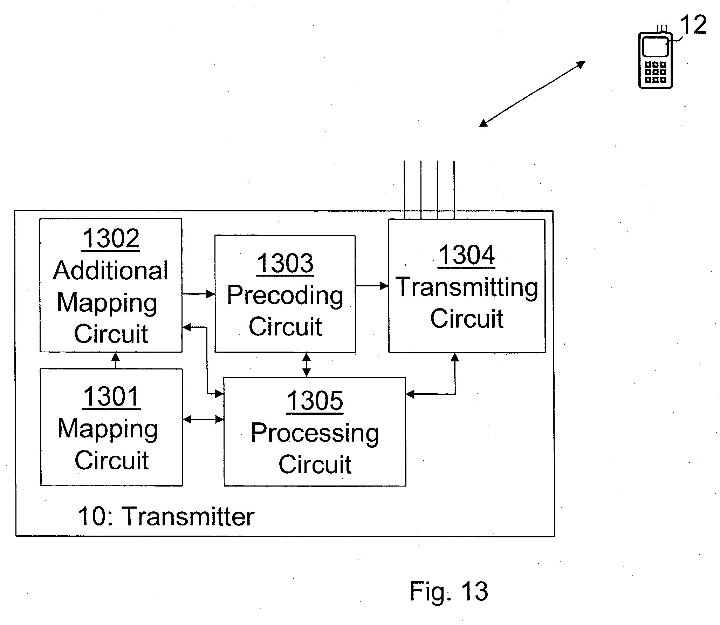

**Figure 13** shows the transmitter node 10 represented by a radio base station and comprising a mapping/processing circuitry for example a processor, performing a mapping according to a mapping pattern between transmission layers to DM-RS ports in LTE Rel-10, where DM-RS ports will be basically used for data demodulation to support multiple LTE-Advanced features. The transmitter node 10 transmits the mapping to the receiver nodes over a transmission circuitry. Thus, modulation symbols of a first codeword and a second codeword are mapped to three or more transmission layers to be transmitted to the receiver node 12. The transmitter node 10 also maps the more than two transmission layers to demodulation reference signal ports within two code division multiplexed groups based on the transmission rank of the channel. The demodulation reference signal ports are associated to the two code division multiplexed groups according to an association pattern. Thereby, transmission using the codewords over each transmission layer is allocated a unique reference signal. The transmission layers resulting from the mapping to the demodulation reference signals ports of each code division multiplexed group are code division multiplexed and frequency division multiplexed to each other. The transmitter node 10 then precodes the codewords and the DM-RS pattern carried over the transmission layers, and transmits the precoded data over the multiple transmit antennas. The transmitter node 10 and receiver node 12 are arranged to be comprised in the radio communications network.

The transmitter node 10 comprises **a mapping circuitry 1301** configured to map the plurality of codewords to the more than two transmission layers.

The transmitter node 10 also comprises **an additional mapping circuit 1302** configured to map each of the more than two transmission layers to a respective demodulation reference signal port according to a fixed pattern based on a transmission rank. Each of the demodulation reference signal ports is arranged to add a demodulation reference signal pattern to the resource block. The demodulation reference signal ports are associated to two code division multiplexing groups according to an association pattern. The transmission layers of each code division multiplexing group are code division multiplexed and the transmission layers of different code division multiplexing groups are frequency division multiplexed.

Furthermore, the transmitter node 10 comprises **a precoding circuit 1303** configured to precode each codeword and demodulation reference signal pattern carried over respective transmission layer. The transmitter node 10 also comprises a **transmitting circuit 1304** comprising the plurality of transmit antennas and configured to transmit the precoded demodulation reference signal pattern in the resource block to the receiver node 12.

Also, the transmitting circuit 1304 may be arranged to control signal to the receiver node 12 to indicate to the receiver node 12 which demodulation reference signal port or ports are allocated to each receiver node.

The present mechanism for transmitting the demodulation reference signal pattern in a resource block to the receiver node may be implemented through one or more processors, such as **a processing circuit 1305** in the transmitter node 10 depicted in Fig. 13, together with computer program code for performing the functions of the present solution. The program code mentioned above may also be provided as a computer program product, for instance in the form of a data carrier carrying computer program code for performing the present solution when being loaded into the transmitter node 10. One such carrier may be in the form of a CD ROM disc. It is however feasible with other data carriers such as a memory stick. The computer program code may furthermore be provided as pure program code on a server and downloaded to the transmitter node 10.

Thus, Fig. 13 shows the transmitter node 10 comprising a mapping/processing circuitry for example a processor, performing a mapping according to a mapping pattern between transmission layers to DM-RS ports in LTE Rel-10, where DM-RS ports will be basically used for data demodulation to support multiple LTE-Advanced features. The transmitter transmits the mapping to the receivers over a transmission circuitry.

Herein is a solution disclosed providing a fixed or common mapping pattern between transmission layers to DM-RS ports without L1 control signaling. Embodiments disclose where DM-RS ports are basically used for data demodulation to support multiple LTE-Advanced features using a MIMO function, e.g. CoMP and spatial multiplexing. More specifically, a mapping pattern is used following the mapping principle by either intra-CW mapping or inter-CW mapping here, which respectively means, in case of beyond transmission rank 2 SU-MIMO transmission, to make two CWs mapped into different CDM groups or to make each CW mapped into both CDM groups in a balanced manner. Transmission rank 1-2 SU/MU-MIMO mapping may be reused as in Rel-9.

Embodiments herein using the mapping pattern may have the following advantages:
Fixed mapping principle for transmission rank 3-8 cases,
Fixed mapping pattern to cover both SU-MIMO and MU-MIMO,
Applicable to a pattern for both normal CP and extended CP, and/or
Applicable to transmission layer mapping for re-transmission.

Also in some embodiments using the intra CW mapping independent HARQ are kept as much as possible for each UE as the codeword interference is reduced by keeping the codewords separated in different CDM groups. In some embodiments using the inter CW mapping a simplified mapping pattern is achieved.

In the drawings and specification, there have been disclosed exemplary embodiments of the invention. However, many variations and modifications can be made to these embodiments without substantially departing from the scope of the present invention. Accordingly, specific terms are employed, the scope of the invention being defined by the following claims.

## Claims

1. A method carried out by a radio base station (10) for transmitting a downlink demodulation reference signal pattern in a resource block to a user equipment (12) using more than two transmission layers over a plurality of transmit antennas, which radio base station (10) and user equipment (12) are comprised in a radio communications network, the method comprising:
- *mapping* (121) a plurality of codewords to the more than two transmission layers;
- *mapping* (123) each of the more than two transmission layers to a respective demodulation reference signal port according to a fixed pattern based on a transmission rank, wherein for each of the demodulation reference signal ports a demodulation reference signal pattern is added to a resource block, which each demodulation reference signal port is associated with only one of two different code division multiplexing groups according to an association pattern, wherein demodulation reference signals associated with each code division multiplexing group are code division multiplexed and demodulation reference signals associated with different code division multiplexing groups are frequency division multiplexed,
- *precoding* (125) transmission layers including the demodulation reference signal pattern; and
- *transmitting* (127) the precoded transmission layers including the demodulation reference signal pattern in the resource block to the user equipment (12),
wherein the fixed pattern defines that transmission layers of the transmission rank mapped to a certain codeword are mapped to demodulation reference signal ports within one and the same code division multiplexing group.

2. A method according to claim 1, wherein the association pattern defines that each of the two code division multiplexing groups comprises up to four demodulation reference signal ports, for each of which a demodulation reference signal is added to a resource block according to the demodulation reference signal pattern and the demodulation reference signal patterns of each of the two code division multiplexing groups occupy same orthogonal frequency division multiplexing resource elements and of which the demodulation reference signals are multiplexed through orthogonal code covers.

3. A method according to any of the claims 1-2, wherein the fixed pattern is a so called intra codeword mapping.

4. A method according to any of the claims 1-3, wherein the resource block is allocated to a number of user equipments (12) in a Multi User Multi Input Multi Output manner.

5. A method according to claim 4, further comprising *control signalling* (120) to indicate to the user equipment (12) which demodulation reference signal port is allocated to each user equipment.

6. A method according to any of the claims 1-3, wherein the resource block is allocated to a user equipment (12) in a Single User Multi Input Multi Output manner.

7. A method according to any of the claims 1-6, wherein the fixed pattern is applicable for transmission rank 2-8.

8. A method according to any of the claims 1-7, wherein the demodulation reference signal pattern is used for Physical Downlink Shared Channel demodulation.

9. A method according to any of the claims 1-8, wherein a first code division multiplexed group of the two code division multiplexing groups is associated with demodulation reference signal ports numbers 1,2,5 and 6, or 1,2,5, and 7; and a second code division multiplexed group is associated with demodulation reference signal ports 3,4,7 and 8, or 3,4,6 and 8.

10. A method according to any of the claims 1-9, wherein the number of transmission layers equals the number of the demodulation reference signal ports.

11. A radio base station (10) for transmitting a downlink demodulation reference signal pattern in a resource block to a user equipment (12) using more than two transmission layers over a plurality of transmit antennas in a radio communications network, comprising
a mapping circuit (1301) configured to map a plurality of codewords to the more than two transmission layers, the radio base station (10) being **characterized in** comprising:
an additional mapping circuit (1302) configured to map each of the more than two transmission layers to a respective demodulation reference signal port according to a fixed pattern based on a transmission rank, wherein for each of the demodulation reference signal ports a demodulation reference signal pattern is added to a resource block and the radio base station (12) is configured to associate each demodulation reference signal port with only one of two different code division multiplexing groups according to an association pattern, wherein the radio base station (12) is configured to code division multiplex demodulation reference signals associated with each the two code division multiplexing groups and to frequency division multiplex demodulation reference signals associated with different code division multiplexing groups;
a precoding circuit (1303) configured to precode transmission layers including the demodulation reference signal pattern; and
a transmitting circuit (1304) comprising the plurality of transmit antennas and configured to transmit the precoded transmission layers including the demodulation reference signal pattern in the resource block to the user equipment (12),
wherein the fixed pattern is configured to map transmission layers of the transmission rank, mapped to a certain codeword, to demodulation reference signal ports within one and the same code division multiplexing group.

12. A radio base station (10) according to claim 11, wherein the association pattern is configured to associate each of the two code division multiplexing groups with up to four demodulation reference signal ports, for each of which a demodulation reference signal is added to a resource block according to the demodulation reference signal pattern and the demodulation reference signal patterns of each of the two code division multiplexing groups are configured to occupy same orthogonal frequency division multiplexing resource elements and the radio base station (12) is configured to multiplex demodulation reference signals through orthogonal code covers of the code division multiplexing group.

13. A radio base station (10) according to any of the claims 11-12, wherein the fixed pattern is a so called intra codeword mapping.

14. A radio base station (10) according to any of the claims 11-13, wherein the radio base station (10) is configured to allocate the resource block to a number of user equipments (12) in a Multi User Multi Input Multi Output manner.

15. A radio base station (10) according to claim 14, is further configured to signal to the user equipment (12) to indicate to the user equipment (12) which demodulation reference signal port is allocated to each user equipment (12).

16. A radio base station (10) according to any of the claims 11-13, wherein the radio base station (10) is configured to allocate the resource block to the user equipment (12) in a Single User Multi Input Multi Output manner.

17. A radio base station (10) according to any of the claims 11-16, wherein the radio base station (10) is configured to apply the fixed pattern for transmission rank 2-8.

18. A radio base station (10) according to any of the claims 11-17, wherein the radio base station (10) is configured to use the demodulation reference signal pattern for Physical Downlink Shared Channel demodulation.

19. A radio base station (10) according to any of the claims 11-18, wherein the radio base station (10) is configured to associate a first code division multiplexed group of the two code division multiplexing groups with demodulation reference signal ports numbers 1,2,5 and 6, or 1,2,5, and 7; and a second code division multiplexed group with demodulation reference signal ports 3,4,7 and 8, or 3,4,6 and 8.

20. A radio base station (10) according to any of the claims 11-19, wherein the number of transmission layers equals the number of the demodulation reference signal ports.

## Patentansprüche

1. Verfahren, das von einer Funkbasisstation (10) ausgeführt wird, zum Senden eines Downlink-Demodulationsreferenzsignalmusters in einem Ressourcenblock unter Verwendung von mehr als zwei Übertragungsschichten über eine Mehrzahl von Sendeantennen an eine Benutzereinrichtung (12), wobei die Funkbasisstation (10) und die Benutzereinrichtung (12) in einem Funkkommunikationsnetz umfasst sind, wobei das Verfahren umfasst:
- Abbilden (121) einer Mehrzahl von Codewörtern auf die mehr als zwei Übertragungsschichten;
- Abbilden (123) jeder der mehr als zwei Übertragungsschichten gemäß einem festen Muster basierend auf einem Übertragungsrang auf einen jeweiligen Demodulationsreferenzsignal-Port, wobei für jeden der Demodulationsreferenzsignal-Ports ein Demodulationsreferenzsignalmuster zu einem Ressourcenblock hinzugefügt wird, wobei jeder Demodulationsreferenzsignal-Port mit nur einer von zwei verschiedenen Codemultiplexgruppen gemäß einem Assoziationsmuster assoziiert wird, wobei Demodulationsreferenzsignale, die mit jeder Codemultiplexgruppe assoziiert sind, codegemultiplext werden, und Demodulationsreferenzsignale, die mit verschiedenen Codemultiplexgruppen assoziiert sind, frequenzgemultiplext werden,
- Vorcodieren (125) von Übertragungsschichten, die das Demodulationsreferenzsignalmuster umfassen; und
- Senden (127) der vorcodierten Übertragungsschichten, die das Demodulationsreferenzsignalmuster im Ressourcenblock umfassen, an die Benutzereinrichtung (12),
wobei das feste Muster definiert, dass Übertragungsschichten des Übertragungsrangs, die auf ein bestimmtes Codewort abgebildet werden, auf Demodulationsreferenzsignal-Ports innerhalb einer und derselben Codemultiplexgruppe abgebildet werden.

2. Verfahren nach Anspruch 1, wobei das Assoziationsmuster definiert, dass jede der zwei Codemultiplexgruppen bis zu vier Demodulationsreferenzsignal-Ports umfasst, wobei für jeden jeweils ein Demodulationsreferenzsignal gemäß dem Demodulationsreferenzsignalmuster zu einem Ressourcenbock hinzugefügt wird, und die Demodulationsreferenzsignalmuster jeder der zwei Codemultiplexgruppen gleiche orthogonale Frequenzmultiplex-Ressourcenelemente belegen, und von welchen die Demodulationsreferenzsignale durch orthogonale Code-Covers gemultiplext werden.

3. Verfahren nach einem der Ansprüche 1 bis 2, wobei das feste Muster eine sogenannte Intra-Codewortabbildung ist.

4. Verfahren nach einem der Ansprüche 1 bis 3, wobei der Ressourcenblock einer Anzahl von Benutzereinrichtungen (12) in einer Mehrbenutzer-Mehrfacheingangs-Mehrfachausgangs-Weise zugewiesen wird.

5. Verfahren nach Anspruch 4, ferner umfassend Steuersignalisierung (120), um der Benutzereinrichtung (12) anzuzeigen, welcher Demodulationsreferenzsignal-Port jeder Benutzereinrichtung zugewiesen wird.

6. Verfahren nach einem der Ansprüche 1 bis 3, wobei der Ressourcenblock einer Benutzereinrichtung (12) in einer Einzelbenutzer-Mehrfacheingangs-Mehrfachausgangs-Weise zugewiesen wird.

7. Verfahren nach einem der Ansprüche 1 bis 6, wobei das feste Muster für Übertragungsrang 2 bis 8 anwendbar ist.

8. Verfahren nach einem der Ansprüche 1 bis 7, wobei das Demodulationsreferenzsignalmuster zur Demodulation eines Physical Downlink Shared Channels verwendet wird.

9. Verfahren nach einem der Ansprüche 1 bis 8, wobei eine erste Codemultiplexgruppe der zwei Codemultiplexgruppen mit Demodulationsreferenzsignal-Ports Nummer 1, 2, 5 und 6 oder 1, 2, 5 und 7 assoziiert ist; und eine zweite Codemultiplexgruppe mit Demodulationsreferenzsignal-Ports 3, 4, 7 und 8 oder 3, 4, 6 und 8 assoziiert ist.

10. Verfahren nach einem der Ansprüche 1 bis 9, wobei die Anzahl von Übertragungsschichten gleich der Anzahl von Demodulationsreferenzsignal-Ports ist.

11. Funkbasisstation (10) zum Senden eines Downlink-Demodulationsreferenzsignalmusters in einem Ressourcenblock unter Verwendung von mehr als zwei Übertragungsschichten über eine Mehrzahl von Sendeantennen in einem Funkkommunikationsnetz an eine Benutzereinrichtung (12), umfassend:
eine Abbildungsschaltung (1301), die so konfiguriert ist, das sie eine Mehrzahl von Codewörtern auf mehr als zwei Übertragungsschichten abbildet, wobei die Basisstation (10) **dadurch gekennzeichnet ist, dass** sie umfasst:
eine zusätzliche Abbildungsschaltung (1302), die so konfiguriert ist, dass sie jede der mehr als zwei Übertragungsschichten gemäß einem festen Muster basierend auf einem Übertragungsrang auf einen jeweiligen Demodulationsreferenzsignal-Port abbildet, wobei für jeden der Demodulationsreferenzsignal-Ports ein Demodulationsreferenzsignalmuster zu einem Ressourcenblock hinzugefügt wird, und die Funkbasisstation (12) so konfiguriert ist, dass sie jeden Demodulationsreferenzsignal-Port mit nur einer von zwei verschiedenen Codemultiplexgruppen gemäß einem Assoziationsmuster assoziiert, wobei die Funkbasisstation (12) so konfiguriert ist, dass sie Demodulationsreferenzsignale, die mit jeder der zwei Codemultiplexgruppen assoziiert sind, codemultiplext, und Demodulationsreferenzsignale, die mit verschiedenen Codemultiplexgruppen assoziiert sind, frequenzmultiplext,
eine Vorcodierschaltung (1303), die so konfiguriert ist, dass sie Übertragungsschichten vorcodiert, die das Demodulationsreferenzsignalmuster umfassen; und
eine Sendeschaltung (1304), welche die Mehrzahl von Antennen umfasst und so konfiguriert ist, dass sie die vorcodierten Übertragungsschichten, die das Demodulationsreferenzsignalmuster im Ressourcenblock umfassen, an die Benutzereinrichtung (12) sendet,
wobei das feste Muster so konfiguriert ist, dass es Übertragungsschichten des Übertragungsrangs, die auf ein bestimmtes Codewort abgebildet werden, auf Demodulationsreferenzsignal-Ports innerhalb einer und derselben Codemultiplexgruppe abbildet.

12. Funkbasisstation (10) nach Anspruch 11, wobei das Assoziationsmuster so konfiguriert ist, dass es jede der zwei Codemultiplexgruppen mit bis zu vier Demodulationsreferenzsignal-Ports assoziiert, wobei für jeden jeweils ein Demodulationsreferenzsignal zu einem Ressourcenbock gemäß dem Demodulationsreferenzsignalmuster hinzugefügt wird, und die Demodulationsreferenzsignalmuster jeder der zwei Codemultiplexgruppen so konfiguriert sind, dass sie gleiche orthogonale Frequenzmultiplex-Ressourcenelemente belegen, und die Funkbasisstation (12) so konfiguriert ist, dass sie Demodulationsreferenzsignale durch orthogonale Code-Covers der Codemultiplexgruppe multiplext.

13. Funkbasisstation (10) nach einem der Ansprüche 11 bis 12, wobei das feste Muster eine sogenannte Intra-Codewortabbildung ist.

14. Funkbasisstation (10) nach einem der Ansprüche 11 bis 13, wobei die Funkbasisstation (10) so konfiguriert ist, dass sie den Ressourcenblock in einer Mehrbenutzer-Mehrfacheingangs-Mehrfachausgangs-Weise einer Anzahl von Benutzereinrichtungen (12) zuweist.

15. Funkbasisstation (10) nach Anspruch 14, die ferner so konfiguriert ist, dass sie an die Benutzereinrichtung (12) signalisiert, um der Benutzereinrichtung (12) anzuzeigen, welcher Demodulationsreferenzsignal-Port jeder Benutzereinrichtung (12) zugewiesen ist.

16. Funkbasisstation (10) nach einem der Ansprüche 11 bis 13, wobei die Funkbasisstation (10) so konfiguriert ist, dass sie den Ressourcenblock in einer Einzelbenutzer-Mehrfacheingangs-Mehrfachausgangs-Weise einer Benutzereinrichtung (12) zuweist.

17. Funkbasisstation (10) nach einem der Ansprüche 11 bis 16, wobei die Funkbasisstation (10) so konfiguriert ist, dass sie das feste Muster für Übertragungsrang 2 bis 8 anwendet.

18. Funkbasisstation (10) nach einem der Ansprüche 11 bis 17, wobei die Funkbasisstation (10) so konfiguriert ist, dass sie das Demodulationsreferenzsignalmuster zur Demodulation eines Physical Downlink Shared Channels verwendet.

19. Funkbasisstation (10) nach einem der Ansprüche 11 bis 18, wobei die Funkbasisstation (10) so konfiguriert ist, dass sie eine erste Codemultiplexgruppe der zwei Codemultiplexgruppen mit Demodulationsreferenzsignal-Ports Nummer 1, 2, 5 und 6 oder 1, 2, 5 und 7 assoziiert; und eine zweite Codemultiplexgruppe mit Demodulationsreferenzsignal-Ports 3, 4, 7 und 8 oder 3, 4, 6 und 8 assoziiert.

20. Funkbasisstation (10) nach einem der Ansprüche 11 bis 19, wobei die Anzahl von Übertragungsschichten gleich der Anzahl von Demodulationsreferenzsignal-Ports ist.

## Revendications

1. Procédé effectué par une station de base radio (10) pour émettre un motif de signal de référence de démodulation de liaison descendante dans un bloc de ressources à destination d'un équipement utilisateur (12) en utilisant plus de deux couches d'émission sur une pluralité d'antennes d'émission, ladite station de base radio (10) et ledit équipement utilisateur (12) étant compris dans un réseau de radiocommunications, le procédé comprenant :
- la mise en concordance (121) d'une pluralité de mots de code avec les plus de deux couches d'émission ;
- la mise en concordance (123) de chacune des plus de deux couches d'émission avec un port de signal de référence de démodulation respectif en fonction d'un motif fixe sur la base d'un rang d'émission, dans lequel, pour chacun des ports de signal de référence de démodulation, un motif de signal de référence de démodulation est ajouté à un bloc de ressources, chaque dit port de signal de référence de démodulation étant associé à un seul de deux groupes de multiplexage par répartition de code différents en fonction d'un motif d'association, dans lequel des signaux de référence de démodulation associés à chaque groupe de multiplexage par répartition de code sont multiplexés par répartition de code et des signaux de référence de démodulation associés à différents groupes de multiplexage par répartition de code sont multiplexés par répartition de fréquence,
- le précodage (125) de couches d'émission comprenant le motif de signal de référence de démodulation ; et
- l'émission (127) des couches d'émission précodées comprenant le motif de signal de référence de démodulation dans le bloc de ressources à destination de l'équipement utilisateur (12),
dans lequel le motif fixe définit que des couches d'émission du rang d'émission mises en concordance avec un certain mot de code sont mises en concordance avec des ports de signal de référence de démodulation à l'intérieur du même groupe de multiplexage par répartition de code.

2. Procédé selon la revendication 1, dans lequel le motif d'association définit que chacun des deux groupes de multiplexage par répartition de code comprend jusqu'à quatre ports de signal de référence de démodulation, pour chacun desquels un signal de référence de démodulation est ajouté à un bloc de ressources en fonction du motif de signal de référence de démodulation et les motifs de signal de référence de démodulation de chacun des deux groupes de multiplexage par répartition de code occupent les mêmes éléments de ressources de multiplexage par répartition de fréquence orthogonale et dont les signaux de référence de démodulation sont multiplexés par l'intermédiaire de couvertures de code orthogonales.

3. Procédé selon l'une quelconque des revendications 1 à 2, dans lequel le motif fixe est une mise en concordance intra-mot de code.

4. Procédé selon l'une quelconque des revendications 1 à 3, dans lequel le bloc de ressources est alloué à un nombre d'équipements utilisateurs (12) d'une manière à utilisateurs multiples, entrées multiples et sorties multiples.

5. Procédé selon la revendication 4, comprenant en outre une signalisation de commande (120) pour indiquer à l'équipement utilisateur (12) le port de signal de référence de démodulation qui est alloué à chaque équipement utilisateur.

6. Procédé selon l'une quelconque des revendications 1 à 3, dans lequel le bloc de ressources est alloué à un équipement utilisateur (12) d'une manière à utilisateur unique, entrées multiples et sorties multiples.

7. Procédé selon l'une quelconque des revendications 1 à 6, dans lequel le motif fixe est applicable aux rangs d'émission 2 à 8.

8. Procédé selon l'une quelconque des revendications 1 à 7, dans lequel le motif de signal de référence de démodulation est utilisé pour une démodulation de canal partagé de liaison descendante physique.

9. Procédé selon l'une quelconque des revendications 1 à 8, dans lequel un premier groupe de multiplexage par répartition de code parmi les deux groupes de multiplexage par répartition de code est associé à des ports de signal de référence de démodulation 1, 2, 5 et 6 ou 1, 2, 5 et 7, et un deuxième groupe de multiplexage par répartition de code est associé à des ports de signal de référence de démodulation 3, 4, 7 et 8 ou 3, 4, 6 et 8.

10. Procédé selon l'une quelconque des revendications 1 à 9, dans lequel le nombre de couches d'émission est égal au nombre de ports de signal de référence de démodulation.

11. Station de base radio (10) pour émettre un motif de signal de référence de démodulation de liaison descendante dans un bloc de ressources à destination d'un équipement utilisateur (12) en utilisant plus de deux couches d'émission sur une pluralité d'antennes d'émission dans un réseau de radiocommunications, comprenant :
un circuit de mise en concordance (1301) configuré pour effectuer la mise en concordance d'une pluralité de mots de code avec les plus de deux couches d'émission ; la station de base radio (10) étant **caractérisée en ce qu'**elle comprend :
un autre circuit de mise en concordance (1302) configuré pour effectuer la mise en concordance de chacune des plus de deux couches d'émission avec un port de signal de référence de démodulation respectif en fonction d'un motif fixe sur la base d'un rang d'émission, dans laquelle, pour chacun des ports de signal de référence de démodulation, un motif de signal de référence de démodulation est ajouté à un bloc de ressources, et la station de base radio (12) est configurée pour effectuer l'association de chaque port de signal de référence de démodulation à un seul de deux groupes de multiplexage par répartition de code différents en fonction d'un motif d'association, dans laquelle la station de base radio (12) est configurée pour effectuer le multiplexage par répartition de code de signaux de référence de démodulation associés à chacun des deux groupes de multiplexage par répartition de code et le multiplexage par répartition de fréquence des signaux de référence de démodulation associés à différents groupes de multiplexage par répartition de code ;
un circuit de précodage (1303) configuré pour effectuer le précodage de couches d'émission comprenant le motif de signal de référence de démodulation ; et
un circuit d'émission (1304) comprenant la pluralité d'antennes d'émission et configuré pour effectuer l'émission des couches d'émission précodées comprenant le motif de signal de référence de démodulation dans le bloc de ressources à destination de l'équipement utilisateur (12),
dans laquelle le motif fixe est configuré pour effectuer la mise en concordance de couches d'émission du rang d'émission, mises en concordance avec un certain mot de code, avec des ports de signal de référence de démodulation à l'intérieur du même groupe de multiplexage par répartition de code.

12. Station de base radio (10) selon la revendication 11, dans laquelle le motif d'association est configuré pour associer chacun des deux groupes de multiplexage par répartition de code avec jusqu'à quatre ports de signal de référence de démodulation, pour chacun desquels un signal de référence de démodulation est ajouté à un bloc de ressources en fonction du motif de signal de référence de démodulation et les motifs de signal de référence de démodulation de chacun des deux groupes de multiplexage par répartition de code sont configurés pour occuper les mêmes éléments de ressources de multiplexage par répartition de fréquence orthogonale et la station de base radio (12) est configurée pour effectuer le multiplexage de signaux de référence de démodulation par l'intermédiaire de couvertures de code orthogonales du groupe de multiplexages par répartition de code.

13. Station de base radio (10) selon l'une quelconque des revendications 11 à 12, dans laquelle le motif fixe est une mise en concordance intra-mot de code.

14. Station de base radio (10) selon l'une quelconque des revendications 11 à 13, dans laquelle la station de base radio (10) est configurée pour effectuer l'allocation du bloc de ressources à un nombre d'équipements utilisateurs (12) d'une manière à utilisateurs multiples, entrées multiples et sorties multiples.

15. Station de base radio (10) selon la revendication 14, dans laquelle la station de base radio (10) est en outre configurée pour effectuer une signalisation à l'équipement utilisateur (12) pour indiquer à l'équipement utilisateur (12) le port de signal de référence de démodulation qui est alloué à chaque équipement utilisateur (12).

16. Station de base radio (10) selon l'une quelconque des revendications 11 à 13, dans laquelle la station de base radio (10) est configurée pour effectuer l'allocation du bloc de ressources à l'équipement utilisateur (12) d'une manière à utilisateur unique, entrées multiples et sorties multiples.

17. Station de base radio (10) selon l'une quelconque des revendications 11 à 16, dans laquelle la station de base radio (10) est configurée pour effectuer l'application du motif fixe aux rangs d'émission 2 à 8.

18. Station de base radio (10) selon l'une quelconque des revendications 11 à 17, dans laquelle la station de base radio (10) est configurée pour effectuer l'utilisation du motif de signal de référence de démodulation pour une démodulation de canal partagé de liaison descendante physique.

19. Station de base radio (10) selon l'une quelconque des revendications 11 à 18, dans laquelle la station de base radio (10) est configurée pour effectuer l'association d'un premier groupe de multiplexage par répartition de code parmi les deux groupes de multiplexage par répartition de code à des ports de signal de référence de démodulation 1, 2, 5 et 6 ou 1, 2, 5 et 7, et d'un deuxième groupe de multiplexage par répartition de code à des ports de signal de référence de démodulation 3, 4, 7 et 8 ou 3, 4, 6 et 8.

20. Station de base radio (10) selon l'une quelconque des revendications 11 à 19, dans laquelle le nombre de couches d'émission est égal au nombre de ports de signal de référence de démodulation.
